# EUROPEAN PATENT SPECIFICATION

(11) **EP 1 532 862 B1**
(45) Date of publication and mention of the grant of the patent: **02.05.2012**
(21) Application number: 05000581.8
(22) Date of filing: 09.11.2001
(51) Int. Cl.: A21D 10/04, A21D 2/18, A21D 6/00

(54) **Refrigerable extended shelf-life liquid batter**
Kühlbarer Flüssigteig mit längerer Haltbarkeit
Pâte liquide réfrigérable et à durée de conservation prolongée

(30) Priority: 10.11.2000 SE 0004108
(43) Date of publication of application: 25.05.2005
(62) Divisional of application: 01983017.3
(73) Proprietor: United Pancakes AB, 220 07 Lund (SE)
(72) Inventor: Öste Triantafyllou, Angeliki, 224 73 Lund (SE); Andersson, Carina, 214 39 Malmö (SE); Öste, Rickard, 224 73 Lund (SE); Ehlde, Sofia, 227 30 Lund (SE)
(74) Representative: Best, Michael

(56) References cited:
- WO-A-99/04640
- GB-A- 2 195 225
- US-A- 3 753 734
- US-A- 4 154 863
- US-A- 4 353 932

## Description

### FIELD OF THE INVENTION

The present invention relates to a ready-to-use refrigerable liquid batter for preparing pancakes, waffles, brownies, muffins, cakes and the like, the batter having a shelf life adequate for commercial distribution and storage, and to a method for its production. "Refrigerable liquid batter" refers to a batter which is sufficiently liquid (pourable) at a temperature below 8°C to permit its use at that temperature for making pancakes etc.

### BACKGROUND OF THE INVENTION

Pancakes, waffles, brownies, muffins, cakes and the like, are appreciated for composing main dishes and desserts. Typically pancakes etc. are made of egg, milk, fat and flour. However the variation of the ingredients is huge. The baked products have a high nutrient content, because they comprise substantial amounts of protein (e.g. milk and egg protein), fat and carbohydrate (e.g. starch), and they have a widely appealing taste. Cheese may be included in addition to or instead of milk and butter. Corn flour or cornstarch may substitute wheat flour and other starchy ingredients may be included such as oats, potato etc. The batter composition and flavour may thus vary to suit different purposes (e.g. main dish, dessert) and to meet the preference of different groups of people (e.g. kosher, ethnic, vegetarian).

By mixing of the fresh ingredients a pancake or waffle batter is produced. Alternatively a dry ingredient mix may be used to which a given amount of water is added. While a tasty product can be prepared from fresh ingredients by a person possessing the required skill and willing to spend the considerable time necessary, the use of a commercial dry ingredient mix shortens the time needed for preparation and requires little skill the result a product that is lacking some of the appeal and tastiness of the freshly prepared product. The obvious solution would be to provide a liquid batter which can be refrigerated, that is, kept at a temperature of from about 0°C to about 8°C. To be commercially acceptable such refrigerated shelf-life batter would need to have a shelf life of a week or more, preferably of at least two weeks.

The reason for the inadequate shelf life of refrigerable batters known in the art is the poor microbiological status after storing the liquid mixture refrigerated for a couple of days. U.S. patent no. 4,353,932 discloses refrigerable pourable and stable pancake batters in which the water activity of the batter is below 0.95 to discourage the growth of microbiological organisms. The prior art batter has a relatively low total sugar content, contains obligatory effective amounts of a leavening agent, and has substantially neutral pH. While the batter of the '932 patent is said to be microbiologically stable over extended periods of time when kept in a refrigerator, no data indicating the level of stability are given.

A spoonable batter having a low water activity of about 0.81 to 0.92 is disclosed in WO 99/04640 to have a refrigerated shelf life of at least about 75 days. The water activity is controlled by the sugar component. The batter also comprises an obligatory shortening agent. The prior art batter has a viscosity between that of a traditional pourable batter and a dough. Thus it is not freely pourable.

GB 2 195 225 A discloses a method of producing a dough comprising preparing a dough mixture with a high liquid content of 60 to 80%, pasteurizing the dough for a short time at 55 to 75°C, below the gelatinization range of the starch, and cooling it down to 15 to 20°C. The pH value is set to 5.8

### OBJECTS OF THE INVENTION

It is an object of the invention to provide a refrigerable liquid batter of the aforementioned kind having a shelf life that is substantially extended in comparison with a freshly prepared state-of-the-art liquid batter.

Further objects of the invention will be evident from the following description of the invention and preferred embodiments thereof, as well as from the appended claims

### SUMMARY OF THE INVENTION

According to the present invention is disclosed a ready-to-use refrigerable liquid batter. Despite its high water content (A_{w} > 0.95) the batter is microbiologically stable. The invention teaches the pasteurisation of a liquid batter for a time period sufficient to substantially lower the bacterial count and at a temperature below the gelatinisation temperature of the starch component of the batter. This treatment renders the product safe to store and use for several weeks, preferably for 12 weeks and more. In particular, according to the invention, thus is provided a ready-to-use refrigerable liquid batter having a water content (A_{w}) of 0.95 or higher and comprising a starch component of a kind that allowed the batter to be pasteurised at a temperature below the gelatinisation temperature of the starch component for a time period sufficient to make the batter display a total bacterial count of 1000 cfu/ml or less after storage for a period of 12 weeks at a temperature of from 0°C to 8°C.

The obstacle to heat treatment (pasteurisation) is the gelatinisation of the starch used to prepare traditional batters. Ideally, gelatinisation should not occur or, at least, should not occur to an extent substantially affecting the pourability of the batter, until the batter is fried. When starch thickens prior to refrigeration the chilled batter is not pourable and its cooking properties are damaged. Wheat flour starch undergoes gelatinisation already at temperatures around 50°C. On the other hand pasteurisation of a batter at such a temperature does not yield an acceptable, that is, microbiologically safe, product.

Gelatinisation upon heating an aqueous starch suspension is dependent, i.a., on water activity, temperature and heating time. Water accessibility is prerequisite for the starch granules to undergo a transition from the micro-crystalline to the amorphous state with a concomitant increase in viscosity of the suspension. Gelatinisation occurs within a range of temperatures and can be monitored by a number of techniques. In the case of an excess of water being used, such as in the present invention, the temperature range of starch gelatinisation is characteristic for the origin of the starch and also depends on its purity. Thus the gelatinisation temperature (T_{g}) depends on whether the starch originates from e.g. potato, rice or wheat. A heterogeneous material undergoes gelatinisation within a broader temperature range than a pure material. Heating at high water content most efficiently decreases bacterial counts.

In this invention a starchy material of a high gelatinisation temperature is included in the batter, forming a gel only during cooking, thereby allowing pasteurisation of the batter. The starch material of the invention is selected from rice starch, rice flour, modified wheat or potato starch, annealed starch of various origin, waxy tapioca, amylomaize, waxy maize, and arrowroot. Disclosed herein is a convenience refrigerated old-fashion batter made of milk, egg and vegetable or milk fat wherein the traditional wheat flour has been substituted by a starch material having a high gelatinisation temperature (T_{g}).

Furthermore, according to the present invention, is provided a refrigerated non-dairy batter comprising a milk alternative that can be used in the place of dairy milk, egg and vegetable fat in combination with the high T_{g} starch. The milk alternative is a milky suspension made from a cereal, such as oats or rice (as the product of the US patent 5,686,123 Lindahl et al.).

It is preferred for the batter of the invention to have a water activity A_{w} greater than 0.95.

It is also preferred that the batter of the invention has been stabilised microbiologically at a temperature from 60°C to 72°C, in particular at a temperature of 67°C.

A stabilisation period of from 2 to 10 minutes is preferred for the batter of the invention, in particular a stabilisation period of 8 minutes.

The viscosity of the batter of the invention measured at 4°C and 0.3 rpm is preferably from 5 Pas to 60 Pas (5,000 cP to 60,000 cP), preferably of from 8 Pas to 30 Pas (8,000 cP to 30,000 cP), in particular from 8 Pas to 15 Pas (8,000 cP to 15,000 cP), most preferred 10 Pas (10,000 cP).

The total bacterial count of the batter of the invention is preferably less than 1,000 cfu/ml upon storing at a temperature of 8°C or lower for 12 weeks, in particular about 500 cfu/ml or less.

According to a preferred aspect of the invention the batter comprises an organic acid or mixture of organic acids in an amount of from 0.05% by weight to 0.30% by weight, preferably of about 0.20% by weight.

According to a preferred aspect of the invention, the organic acid or mixture of organic acids of the batter is selected from malic acid, sorbic acid including potassium sorbate, lactic acid, acetic acid, citric acid, tartaric acid, benzoic acid; particularly preferred is sorbic acid and malic acid; most preferred is a mixture of sorbic acid and malic acid.

According to a preferred aspect of the invention the pH of the batter is adjusted to from 5.0 to 6.5 by said acid or mixture of acids, in particular to about 5.9.

The starch component of the batter is selected from rice starch, rice flour, modified wheat starch, modified potato starch, annealed starch of various origin, waxy tapioca, amylomaize, waxy maize, and arrowroot.

According to a preferred aspect of the invention is disclosed a pancake, waffle, brownie, muffin, cake and other fluffy baked product having a baked height to raw height of greater than about 1, prepared from the batter of the invention by optionally adding a leavening agent to the batter.

### DESCRIPTION OF PREFERRED EMBODIMENTS

**General description of the batter of the invention set out in detail in the following EXAMPLES.** The liquid refrigerable batter has a water activity A_{w} of around 0.98. It comprises essentially milk (or a milk substitute), eggs, a starchy material (starch or flour) with a high gelatinisation temperature (T_{g}) and a preservative such as an organic acid, preferably malic acid, and/or potassium sorbate. The batter is pasteurised at 60-72°C for a period of 2-10 min, preferably at 67°C for 8 minutes. Then batter is cooled rapidly to a temperature of 8°C or lower and packed aseptically. The viscosity of the batter at 4°C and 0.3 rpm is about 10 Pas (10,000 cP), similar to the viscosity of a conventional batter. The batter may be used for preparing pancakes, waffles or the like. The taste and consistency of these products resembles that of their traditional counterparts. Pasteurisation lowers microbial counts to a level rendering the product safe to consume for at least 10 weeks when kept at a temperature of 8°C or lower. Thus the product of the invention may be safely distributed and stored before being used to prepare pancakes and waffles. Current Swedish maximum acceptable microbial contamination values for food intended for human consumption are as follows:
- Total number of microorganisms 10⁷ cfu;
- Bacillus cereus 10⁴ cfu;
- Yeast 10⁴ cfu;
- Moulds 10³ cfu.

### EXAMPLE 1 (Comparative). Pancake batter prepared from UHT dairy milk.

### Constituents:

1) Cow milk 40-70% by weight, preferably 62% by weight, having a fat content of around 1.5% and a total solids content of about 10%. The milk had been treated with Ultra High Temperature (UHT) method at 142°C for 4 sec;
2) Eggs 10-30% by weight, preferably 20% by weight, of homogenised whole eggs;
3) Rice starch in an amount of 10-30% by weight, preferably 19% by weight (Remy B7, from Remy Industries, Leuven, Belgium);
4) Salt (sodium chloride) in an amount of 0-0.7% by weight, preferably 0.5% by weight;
5) A food grade organic acid or a mixture of such acids in an amount of 0.05-0.30% by weight, such as malic, lactic, acetic, citric acid, to adjust the pH at about 5.5 to about 6.5; preferably malic acid 0.1% by weight of malic acid to obtain a pH 5.9;
6) Optionally, potassium sorbate in an amount of 0-0.25% by weight, preferably 0.15% by weight;
7) Flavours may optionally be added, such as vanilla, cumin, cheese favour, etc.

The ingredients are thoroughly mixed to form a batter. The batter is pasteurised at 60-72°C, preferably at about 67°C, for 2-10 minutes, preferably about 8 minutes. The product is cooled to a temperature of 8°C or lower but not to a temperature at which it begins to freeze, and stored at that temperature to prevent microbial growth.

### Microbiological status:

- Prior to pasteurization
   Total count: 360 cfu/ml (colony forming units per ml) of batter;
   Bacillus cereus: <10 cfu/ml;
   Yeast and moulds: 20 cfu/ml.
- Directly after pasteurisation for 8 minutes at 67°C
   Total count: 150 cfu/ml with malic acid only or 80 cfu/ml with both malic acid and sorbate;
   Bacillus cereus <10 cfu/ml;
   Yeast and moulds: 1 cfu/ml.
- After storing the pasteurised product at 8°C
   a) With both malic acid and sorbate; 12 weeks' storage
      Total count: 130 cfu/ml;
      Bacillus cereus 20 cfu/ml.
   b) With malic acid only; 6 weeks' storage
      Total count: 500 cfu/ml;
      Bacillus cereus 400 cfu/ml.

EXAMPLE 2. **Pancake batter prepared from an oat base.** Oat drink UHT treated with total solids content of 10% by weight is used instead of the cow milk of Example 1; otherwise, the procedure of EXAMPLE 1 is followed. A commercial oat base product of the Lindahl et al. or oat-based milk alternatives like Adavena^{©} M40 (Ceba AB, Sweden) may be employed. The fat content of the oat base is adjusted to a total fat content of 1.5% by the addition of a vegetable oil such as rape seed, sunflower, safflower, maize, olive oil; preferably rape seed oil is used. Calcium is added to the oat base as tricalcium phosphate in an amount of about 0.1% by weight to increase the nutritional value of the batter. This batter may be used also by people who avoid milk due to lactose intolerance, people that are allergic to milk protein and people on a kosher diet.

### Microbiological status

- Prior to pasteurization
   Total count: 350 cfu/ml of batter;
   Bacillus cereus <10 cfu/ml;
   Yeast and moulds 50 cfu/ml.
- Directly after pasteurisation at 67°C for 8 minutes
   Total count: 150 cfu/ml with malic acid only or 80 cfu/ml with both acid and sorbate;
   Bacillus cereus <10 cfu/ml;
   Yeast and moulds 2 cfu/ml.
- After storing the pasteurised product for at 8°C
   a) With both malic acid and sorbate; 12 weeks' storage
      Total count: 190 cfu/ml;
      Bacillus cereus 20 cfu/ml.
   b) With malic acid only; 6 weeks' storage
      Total count: 500 cfu/ml;
      Bacillus cereus 350 cfu/ml.

EXAMPLE 3 (Comparative). **Pancake batter prepared from a soy or almond base**. Soy drink or almond drink UHT substitutes the cow milk in EXAMPLE 1; otherwise, the procedure of EXAMPLE 1 is followed. If a soy base is used sugar may be added to obtain browning upon heating the batter. The absence of reducing sugars in soy drink will otherwise produce an only lightly coloured pancake whereas the lactose and maltose of dairy milk and oat drink, respectively, will promote the formation of coloured Maillard products. A liquid pancake batter storable for 10 weeks at a temperature of 8°C or lower is obtained.

EXAMPLE 4. **Pancake batter prepared from rice drink**. The dairy milk of EXAMPLE 1 is exchanged for rice drink, the preparation of the batter otherwise being unchanged. A liquid pancake batter storable for 10 weeks at a temperature of 8°C or lower is obtained.

Example 5 (Comparative). **Pancake batter prepared from pasteurised dairy milk.** The sterilised or high-temperature pasteurised cow milk of EXAMPLE 1 is substituted by dairy milk pasteurised at 72°C for 15 sec thereby having a higher total microbial count than UHT milk; otherwise, the procedure of EXAMPLE 1 is followed. A liquid pancake batter storable for a shorter period of time than the batters of EXAMPLES 1-4 is obtained.

### Microbiological status:

Prior to pasteurization
   Total count: 9,000 cfu/ml of batter;
   Bacillus cereus <10 cfu/ml;
   Yeast and moulds 20 cfu/ml.
Directly after pasteurisation at 67°C for 8 minutes
   Total count: 7,000 cfu/ml with malic acid only or 80 cfu/ml with both acid and sorbate;
   Bacillus cereus 100 cfu/ml;
   Yeast and moulds 1 cfu/ml.
- After storing the pasteurised product for at 8°C
   a) With both malic acid and sorbate; 12 weeks' storage
      Total count: 130 cfu/ml;
      Bacillus cereus 20 cfu/ml.
   b) With malic acid only; 6 weeks' storage
      Total count: 5,500 cfu/ml;
      Bacillus cereus 20 cfu/ml.

## Claims

1. A ready-to-use refrigerable liquid batter having a water activity A_{w} of 0.95 or higher, comprising
- a starch component of a kind that allowed the batter to be pasteurised at a temperature below the gelatinisation temperature of the starch component for a time period sufficient to make the batter display a total bacterial count of 1000 cfu/ml or less after storage for a period of 12 weeks at a temperature of from 0°C to 8°C and
- a milk alternative in form of a milky suspension made from cereal,
wherein the starch component is selected from rice starch, rice flour, modified wheat or potato starch, annealed starch of various origin, waxy tapioca, amylomaize, waxy maize, and arrowroot,
wherein the refrigerable liquid batter refers to a batter which is sufficiently liquid (pourable) at a temperature below 8°C to permit its use at that temperature for making pancakes, waffles, brownies, muffins and cakes.

2. The batter of claim 1, wherein said bacterial count is 500 cfu/ml or less.

3. The batter of any of claims 1 or 2, wherein said storage temperature is 8°C.

4. The batter of any of claims 1 to 3, wherein the cereal is selected from oats or rice.

## Patentansprüche

1. Gebrauchsfertiger kühlbarer Flüssigteig mit einer Wasseraktivität A_{w} von 0,95 oder mehr, umfassend
- eine Stärkekomponente einer Art, dass der Teig bei einer Temperatur unter der Verkleisterungstemperatur der Stärkekomponente für einen Zeitraum pasteurisiert werden kann, der ausreicht, dass der Teig eine Gesamtkeimzahl von 1000 KBE/ml oder weniger nach der Lagerung für einen Zeitraum von 12 Wochen bei einer Temperatur von 0 °C bis 8 °C zeigt, und
- einen Milchersatz in Form einer aus Getreide hergestellten milchigen Suspension,
wobei die Stärkekomponente ausgewählt ist aus Reisstärke, Reismehl, modifizierter Weizen-oder Kartoffelstärke, getemperter Stärke (annealed starch) verschiedenen Ursprungs, Wachstapioka, Amylomaisstärke, Wachsmais und Pfeilwurzstärke,
wobei sich der kühlbare Flüssigteig auf einen Teig bezieht, der bei einer Temperatur unter 8 °C ausreichend flüssig (gießbar) ist, dass er bei dieser Temperatur zur Herstellung von Pfannkuchen, Waffeln, Brownies, Muffins und Kuchen verwendet werden kann.

2. Teig nach Anspruch 1, wobei die Keimzahl 500 KBE/ml oder weniger beträgt.

3. Teig nach einem der Ansprüche 1 oder 2, wobei die Lagertemperatur 8 °C beträgt.

4. Teig nach einem der Ansprüche 1 bis 3, wobei das Getreide aus Hafer oder Reis ausgewählt ist.

## Revendications

1. Pâte liquide réfrigérable et prête à l'usage ayant une activité d'eau A_{w} de 0,95 ou plus, comprenant
- un composant d'amidon d'un type qui a permis à la pâte d'être pasteurisée à une température inférieure à la température de gélatinisation du composant d'amidon pendant une période de temps suffisante pour que la pâte affiche un nombre total de bactéries de 1 000 ufc/ml ou moins après le stockage pendant une période de 12 semaines à une température comprise entre 0 et 8 °C et
- un lait alternatif sous la forme d'une suspension laiteuse à base de céréale,
dans laquelle le composant d'amidon est sélectionné parmi l'amidon de riz, la farine de riz, l'amidon de froment ou la fécule de pomme de terre modifiée, l'amidon recuit d'origine variée, le tapioca cireux, l'amylomaïs, le maïs cireux et l'arrow-root,
dans laquelle la pâte liquide réfrigérable concerne une pâte qui est suffisamment liquide (coulante) à une température inférieure à 8 °C pour permettre son utilisation à cette température pour faire des crêpes, des gaufres, des brownies, des muffins et des gâteaux.

2. Pâte selon la revendication 1, dans laquelle le nombre de bactéries s'élève à 500 ufc/ml ou moins.

3. Pâte selon l'une quelconque des revendications 1 ou 2, dans laquelle ladite température de stockage est de 8 °C.

4. Pâte selon l'une quelconque des revendications 1 à 3, dans laquelle la céréale est sélectionnée parmi l'avoine ou le riz.
